(19) **Europäisches Patentamt / European Patent Office / Office européen des brevets**

(11) **EP 2 432 108 B1**

(12) **FASCICULE DE BREVET EUROPEEN**

(45) Date de publication et mention de la délivrance du brevet:
**30.05.2018 Bulletin 2018/22**

(51) Int Cl.:
*H02M 1/00* *(2006.01)*    *H02M 3/158* *(2006.01)*

(21) Numéro de dépôt: **11306139.4**

(22) Date de dépôt: **13.09.2011**

(54) **Système d'alimentation régulée à grande dynamique d'entrée de tension**

System für regulierte Speisung mit hoher Eingangsdynamik der Spannung

Regulated power-supply system with large dynamic voltage input range

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.09.2010 FR 1003688**

(43) Date de publication de la demande:
**21.03.2012 Bulletin 2012/12**

(73) Titulaire: **Thales**
**92200 Neuilly Sur Seine (FR)**

(72) Inventeurs:
- **Klein, François**
  **26027 VALENCE CEDEX (FR)**
- **Taurand, Christophe**
  **26027 VALENCE CEDEX (FR)**

(74) Mandataire: **Lavoix**
**2, place d'Estienne d'Orves**
**75441 Paris Cedex 09 (FR)**

(56) Documents cités:
**US-A- 5 831 418    US-B1- 6 977 488**

- **JINGQUAN CHEN ET AL: "Buck-boost PWM converters having two independently controlled switches", 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001; [ANNUAL POWER ELECTRONICS SPECIALISTS CONFERENCE], NEW YORK, NY : IEEE, US, vol. 2, 17 juin 2001 (2001-06-17), pages 736-741, XP010559317, DOI: DOI:10.1109/PESC.2001.954206 ISBN: 978-0-7803-7067-8**

## Description

La présente invention concerne un système d'alimentation régulée à grande dynamique d'entrée de tension.

Plus particulièrement, l'invention concerne un système d'alimentation qui comporte un convertisseur abaisseur/élévateur de tension à inductance commune et qui comporte au moins deux organes commutateurs à semi-conducteurs commandables, associés l'un à la fonction d'abaisseur du convertisseur et l'autre à la fonction d'élévateur de ce convertisseur.

On sait que de tels systèmes d'alimentation peuvent présenter trois modes de fonctionnement, l'un en abaisseur, l'autre en élévateur et le dernier en abaisseur/élévateur de tension.

Ces trois modes de fonctionnement imposent alors l'utilisation de trois logiques de contrôle différentes implémentées et d'une commutation entre ces différentes logiques de contrôle.

Dans l'état de la technique, on surveille par exemple la différence de tension entre l'entrée et la sortie du système d'alimentation et on sélectionne alors la loi de commande la plus adaptée. Ceci permet d'obtenir le fonctionnement souhaité afin d'abaisser ou d'élever la tension ou obtenir l'optimum de rendement.

Cette solution est par exemple décrite dans le document US 6, 977, 488 B1, et est déjà implémentée dans des systèmes d'alimentation du commerce tels que le contrôleur LINEAR TECHNOLOGY LTC3780.

Cependant elle présente un certain nombre d'inconvénients.

En effet il y a trois modes de fonctionnement et donc trois logiques de contrôle implémentées. En exploitation, le système fonctionnant la plupart du temps seulement dans l'un des trois modes, s'il y a une panne du contrôle dans un des deux autres modes, celle-ci peut être cachée. Il y a alors une possibilité d'avoir une panne latente qui n'est pas détectée dans le mode de fonctionnement nominal, mais qui peut entraîner une indisponibilité du système dans certains évènements transitoires.

Or de tels systèmes peuvent être implémentés par exemple dans des applications aéronautiques où l'on conçoit qu'un tel inconvénient puisse se traduire par des problèmes majeurs.

Par ailleurs la logique de basculement d'un mode de contrôle à un autre se fait sur la base d'une comparaison avec hystérésis. Ceci se traduit par plusieurs inconvénients à savoir que le mode de fonctionnement dans les zones de transition dépend du sens de progression de la tension d'entrée, qu'il y a un risque d'instabilité si l'hystérésis de la comparaison n'est pas suffisamment grand et enfin que la discontinuité du mode de fonctionnement risque d'avoir un impact sur la tension de sortie lors des phases de transition.

Le but de l'invention est donc de résoudre ces problèmes.

A cet effet l'invention a pour objet un système d'alimentation selon la revendication 1.

Selon d'autres aspects de l'invention, le système d'alimentation comprend l'une ou plusieurs des caractéristiques optionnelles des revendications 2 à 10.

L'invention sera mieux comprise à l'aide de la description qui va suivre donnée uniquement à titre d'exemple et faite en se référant aux dessins annexés, sur lesquels :

- la figure 1 représente un schéma synoptique illustrant un exemple de réalisation d'un convertisseur entrant dans la constitution d'un système d'alimentation de l'état de la technique,
- les figures 2 à 8 illustrent le fonctionnement d'un tel système en abaisseur de tension,
- les figures 9 à 15 illustrent le fonctionnement de ce système en élévateur de tension,
- les figures 16 à 21 illustrent le fonctionnement de ce système en abaisseur/élévateur de tension,
- la figure 22 illustre le rendement d'une telle structure,
- la figure 23 illustre le basculement entre différents modes de fonctionnement tel que mis en oeuvre dans un système d'alimentation de l'état de la technique,
- la figure 24 représente un schéma synoptique illustrant un premier exemple de réalisation d'un système d'alimentation selon l'invention,
- la figure 25 représente un schéma synoptique d'une variante de réalisation d'un système d'alimentation selon l'invention,
- la figure 26 représente un schéma synoptique d'un exemple d'application d'un système d'alimentation selon l'invention,
- la figure 27 illustre la relation des commandes en entrée et en sortie d'un système d'alimentation selon l'invention et
- les figures 28 et 29 illustrent d'autres variantes de réalisation possibles d'un système d'alimentation selon l'invention.

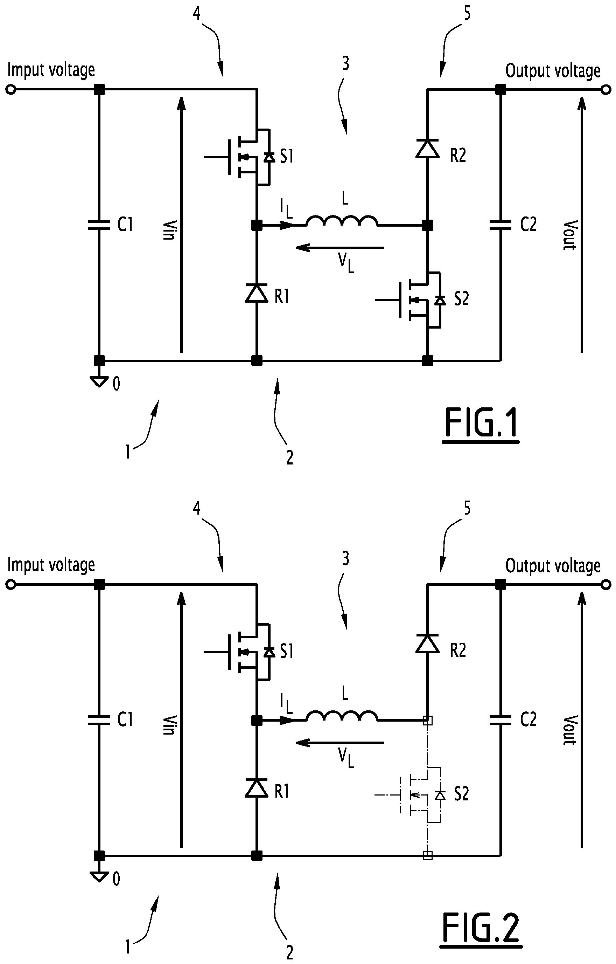

On a en effet illustré sur la figure 1, un exemple de réalisation d'un système connu d'alimentation par exemple continue régulée à grande dynamique d'entrée de tension qui est désigné par la référence générale 1 sur cette figure.

Ce système d'alimentation trouve par exemple des applications dans le domaine aéronautique. Il comporte alors un convertisseur abaisseur/élévateur de tension à inductance commune L, le convertisseur étant désigné par la référence générale 2 et l'inductance commune L étant désignée par la référence générale 3.

Cette inductance L est connectée entre les points milieux de deux branches désignées par les références 4 et 5 respectivement sur cette figure, chaque branche comportant un organe commutateur à semi-conducteur commandable S1 et S2 respectivement, constitués par exemple par des transistors de type MOSFET et un redresseur R1 et R2 respectivement, pouvant être constitués par des diodes ou encore des organes commutateurs à semi-conducteur commandables. Chaque branche comporte alors un organe commutateur à semi-conducteur et un redresseur en série.

L'organe commutateur à semi-conducteur S1 est placé dans la partie haute de la branche 4 correspondante, cette branche étant connectée en parallèle avec un composant capacitif par exemple C1 entre la tension d'entrée et le zéro.

Cette partie du système constitue la partie abaisseur du convertisseur.

L'organe commutateur à semi-conducteur commandable S2 est quant à lui placé dans la partie inférieure de la branche 5, le redresseur R2 étant placé dans la partie supérieure de cette branche et cette branche étant connectée en parallèle avec un composant capacitif C2 et délivrant la tension de sortie du système. Cette partie du système constitue la partie élévateur du convertisseur.

On notera que les composants capacitifs C1 et C2 sont utilisés comme moyens de filtrage d'entrée et de sortie.

Un tel convertisseur est donc un convertisseur continu/continu de type abaisseur/élévateur de tension également connu dans l'état de la technique sous le terme anglais de « buck-boost ».

Il existe principalement trois façons de commander le fonctionnement de cette structure.

La première façon consiste à le commander en abaisseur. Comme cela est illustré sur la figure 2, si l'on ne commande pas l'organe S2, celui-ci reste ouvert en permanence et le redresseur R2 conduit de façon permanente. La structure se rapporte alors à une structure de type abaisseur « buck ». Le fonctionnement en conduction continue d'une telle structure se décompose en deux phases d'une durée totale appelée T, période de découpage. Ces deux phases sont pour l'une une phase α ou phase de conduction et pour l'autre une phase β ou phase de roue libre.

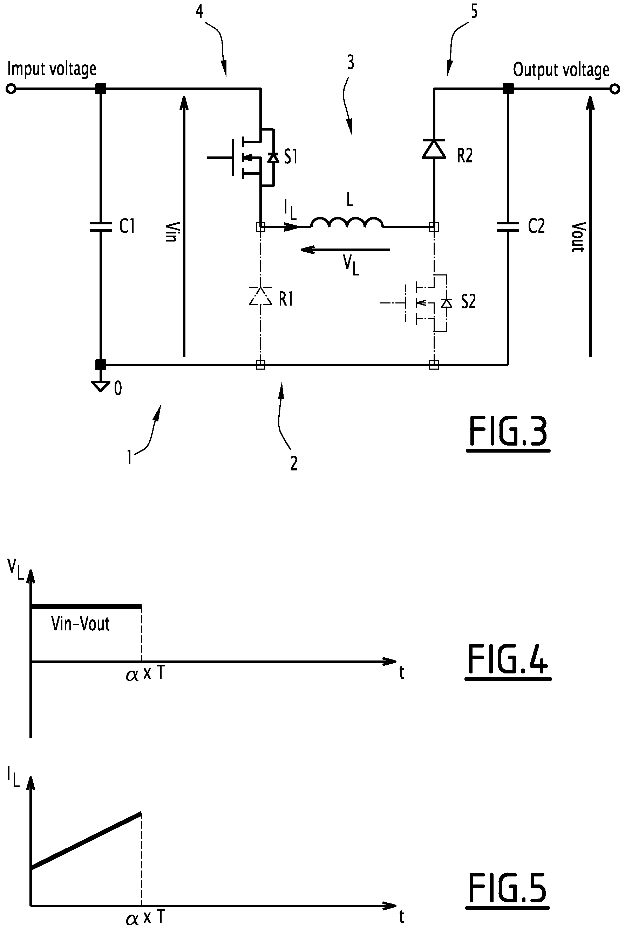

En phase α ou phase de conduction illustrée sur la figure 3, l'organe S1 conduit, forçant la tension aux bornes de l'inductance L à la valeur $V_L = V_{in} - V_{out}$.

Cette tension étant positive, le courant dans l'inductance croît de façon linéaire en fonction du temps comme cela est illustré sur les figures 4 et 5.

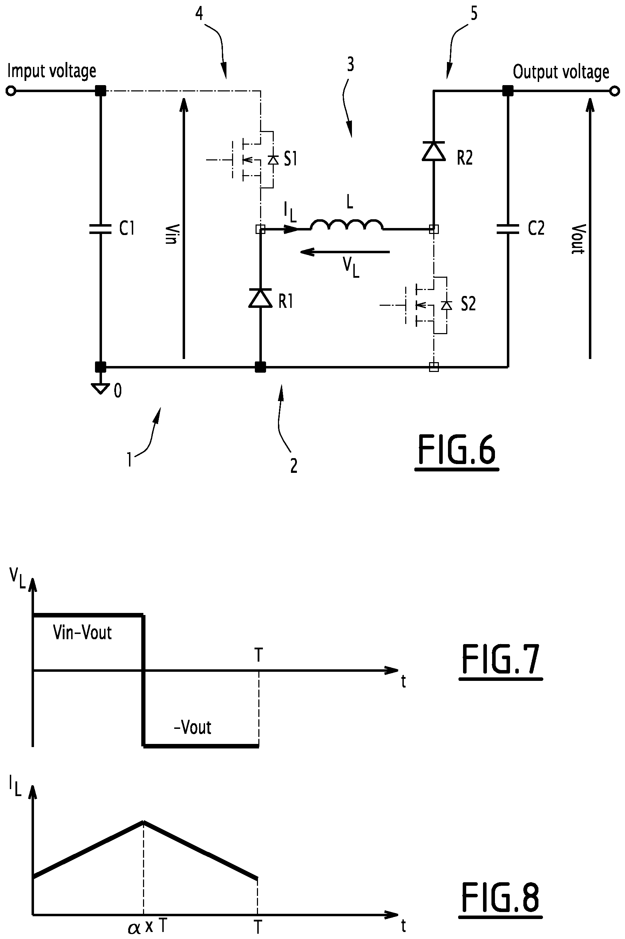

En phase β ou phase de roue libre, l'organe S1 s'ouvre, comme cela est illustré sur la figure 6. Empêchant toute discontinuité de courant dans l'inductance, le redresseur R1 devient passant. La tension aux bornes de l'inductance L devient négative, faisant ainsi décroître le courant la traversant comme cela est illustré sur les figures 7 et 8.

Si l'on appelle $\alpha_{buck}$ le rapport cyclique de commande de l'organe S1, on a alors la relation suivante entre la tension de sortie et la tension d'entrée $V_{out} = \alpha_{buck} V_{in}$.

Le convertisseur abaisse alors la tension d'entrée.

Le deuxième mode de fonctionnement de ce système correspond au mode élévateur également appelé « boost ».

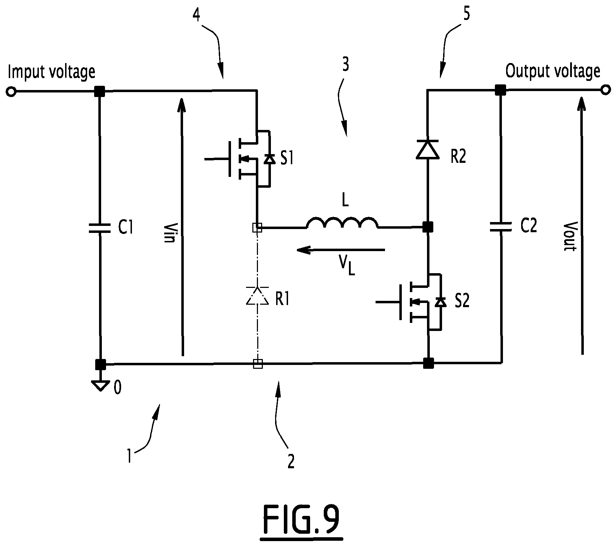

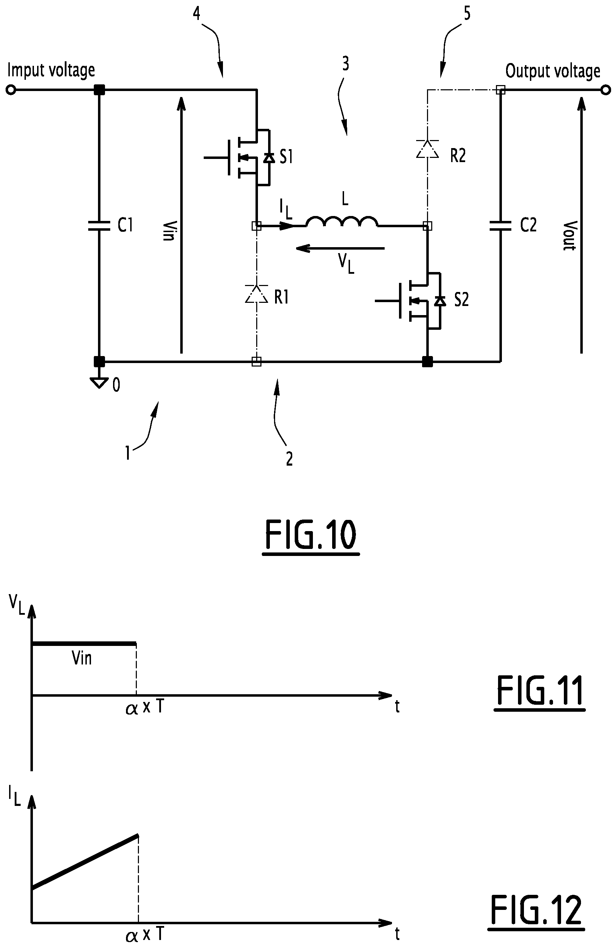

Comme cela est illustré sur la figure 9, si l'on commande de façon permanente l'organe S1, il reste passant et le redresseur R1 reste bloqué de façon permanente. La structure se rapporte alors à une structure de type élévateur « boost ». Le fonctionnement en conduction continue d'une telle structure se décompose également en deux phases d'une durée totale appelée T, période de découpage. La première phase est une phase α ou phase de charge et la deuxième phase une phase β ou phase de roue libre. Comme cela est illustré sur la figure 10, en phase α ou phase de charge, l'interrupteur S2 conduit, forçant la tension aux bornes d'inductance L à la valeur $V_L = V_{in}$.

Cette tension étant positive, le courant dans l'inductance L croît de façon linéaire en fonction du temps comme cela est illustré sur les figures 11 et 12.

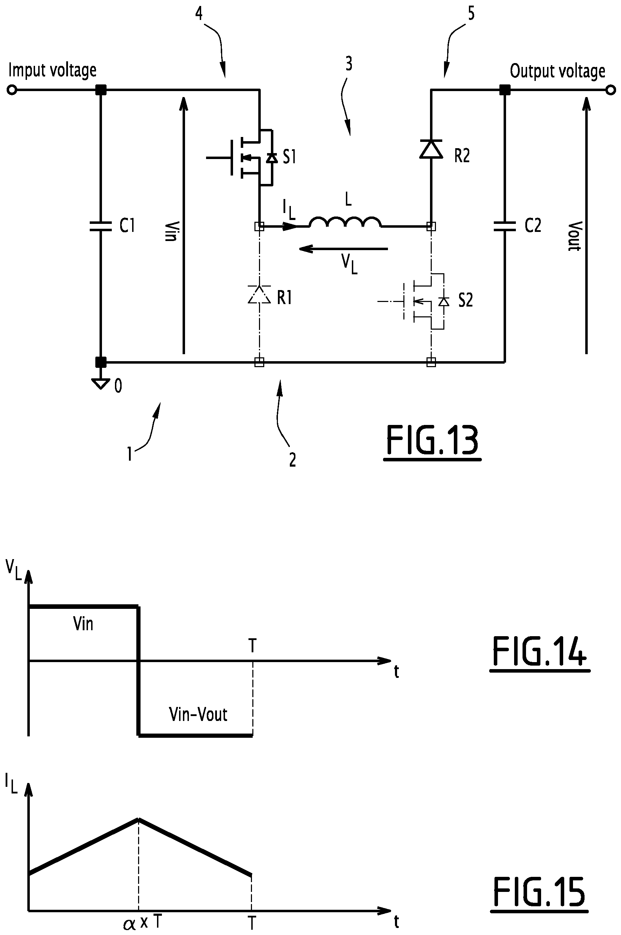

En phase β ou phase de roue libre, comme cela est illustré sur la figure 13, l'organe S2 s'ouvre. Empêchant toute discontinuité du courant dans l'inductance L, le redresseur R2 devient passant. La tension aux bornes de l'inductance L devient négative, égale à la valeur $V_L = V_{in} - V_{out}$, faisant ainsi décroître le courant la traversant comme cela est illustré sur les figures 14 et 15.

Si l'on appelle $\alpha_{boost}$ le rapport cyclique de commande de l'organe S2, on a alors la relation suivante entre la tension de sortie et la tension d'entrée :

$$V_{out} = \frac{V_{in}}{\alpha_{boost}}$$

Le convertisseur élève alors la tension d'entrée.

Le troisième mode de fonctionnement du système est le mode en abaisseur/élévateur également appelé « buck-boost » en anglais.

Ceci est obtenu en commandant de la même façon les organes S1 et S2. Le fonctionnement en conduction continue d'une telle structure se décompose également en deux phases d'une durée totale appelée T, période de découpage, à savoir une première phase α ou phase de charge, une seconde phase β ou phase de roue libre.

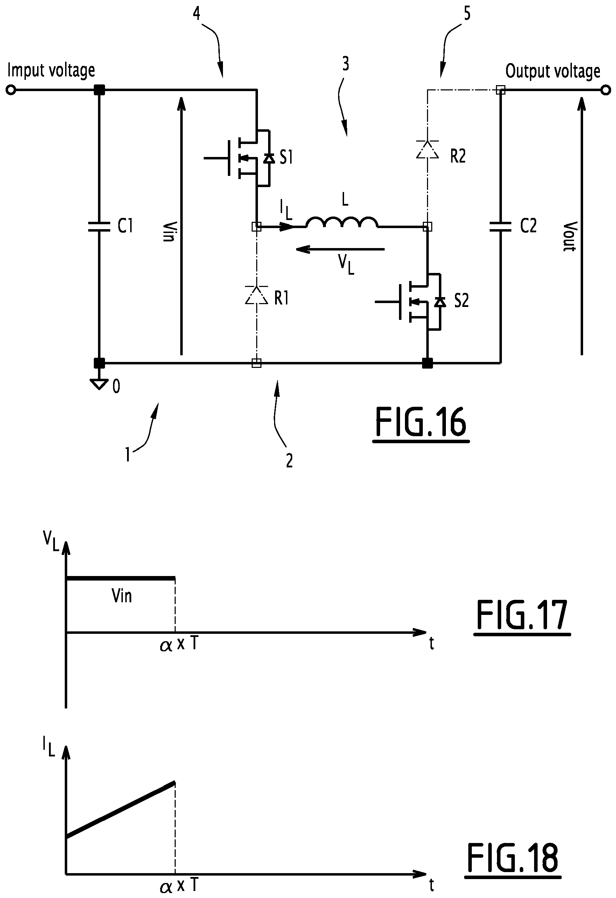

Lors de la phase de charge illustrée sur la figure 16, les organes S1 et S2 conduisent, forçant la tension aux bornes de l'inductance L à la valeur $V_L = V_{in}$. Cette tension étant positive, le courant dans l'inductance croît de façon linéaire en fonction du temps comme cela est illustré sur les figures 17 et 18.

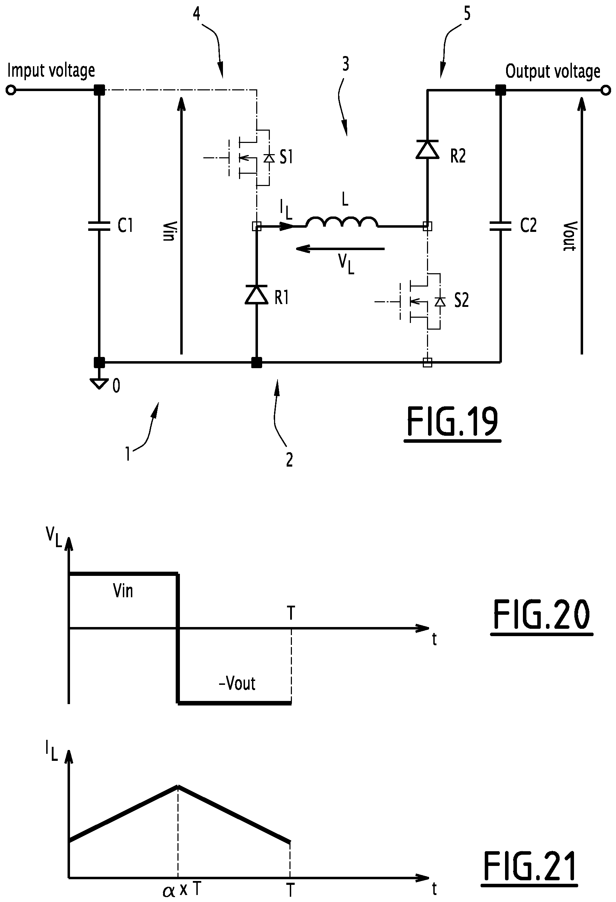

Lors de la phase de roue libre, telle qu'illustrée sur la figure 19, les organes S1 et S2 s'ouvrent. Empêchant toute discontinuité de courant dans l'inductance L, les redresseurs R1 et R2 deviennent passants. La tension aux bornes de l'inductance L devient négative, égale à l'opposé de la tension de sortie, faisant ainsi décroître le courant la traversant comme cela est illustré sur les figures 20 et 21.

Si l'on appelle $\alpha_{buck\text{-}boost}$ le rapport cyclique de commande des organes S1 et S2 on a la relation suivante entre la tension de sortie et la tension d'entrée :

$$V_{out} = V_{in}\ \alpha_{buck\text{-}boost}\ /\ [1\text{-}\ \alpha_{buck\text{-}boost}]$$

Le convertisseur élève ou abaisse la tension d'entrée suivant que l'on a respectivement $\alpha_{buck\text{-}boost} \geq 0,5$ ou $\alpha_{buck\text{-}boost} \leq 0,5$.

Si la dynamique d'entrée du convertisseur impose que celui-ci doive élever ou abaisser la tension, la solution est donc de commander le convertisseur en abaisseur-élévateur.

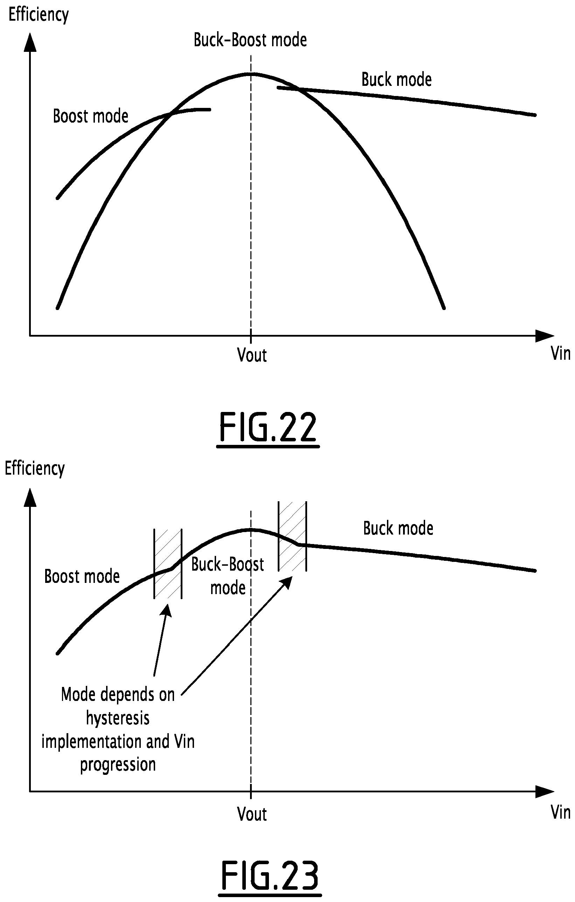

Toutefois l'optimum de rendement d'une telle commande est lorsque la tension d'entrée est proche de la tension de sortie comme cela est illustré sur la figure 22.

Dans l'état de la technique, la solution consiste à surveiller par exemple la différence de tension entre l'entrée et la sortie et à commuter la loi de commande afin d'avoir la loi la plus adaptée possible à savoir en mode abaisseur, en mode élévateur ou en mode abaisseur/élévateur, ce qui permet d'obtenir un optimum de rendement comme cela est illustré sur la figure 23.

Une telle commande est déjà implémentée dans des contrôleurs du commerce comme par exemple le contrôleur LINEAR TECHNOLOGY LTC3780.

Cependant et comme cela est indiqué précédemment, cette solution présente un certain nombre d'inconvénients au niveau des pannes latentes qui peuvent ne pas être détectées et des risques d'instabilité de discontinuité liés au basculement d'un mode de fonctionnement à un autre.

Pour résoudre ces problèmes et dans le système d'alimentation selon l'invention, on propose de commander indépendamment les organes S1 et S2 de façon continue, en fonction des tensions d'entrée et de sortie du système.

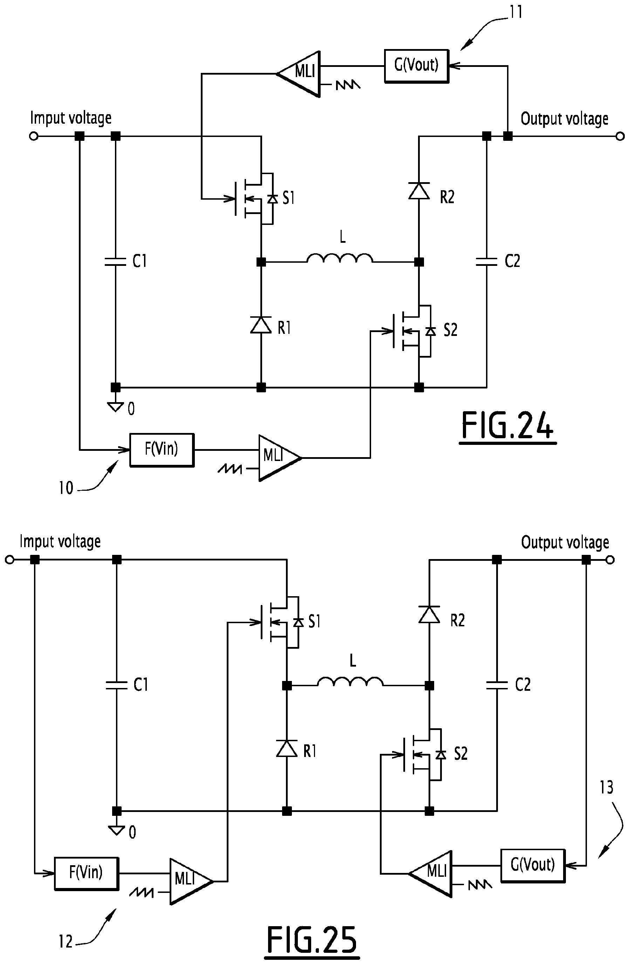

Ceci est par exemple illustré sur la figure 24 où l'on reconnaît les éléments déjà décrits précédemment à savoir les organes capacitifs C1, C2, les redresseurs R1, R2, l'inductance commune L et les organes commutateurs à semi-conducteurs commandables S1 et S2.

En fait dans le système selon l'invention, l'un de ces organes commutateurs à semi-conducteurs commandables est piloté par des moyens de commande en fonction de la tension d'entrée du système, et l'autre est piloté par des moyens d'asservissement sur la tension de sortie.

Ainsi par exemple et comme cela est illustré sur la figure 24, l'organe S2 peut être piloté par des moyens de commande, désignés par la référence générale 10, en fonction de la tension d'entrée du système tandis que l'organe S1 peut quant à lui être piloté par des moyens d'asservissement sur la tension de sortie tels que désignés par la référence générale 11.

Sur cette figure 24, on a décrit alors une première solution qui consiste à commander l'organe S1, c'est-à-dire l'organe abaisseur en fonction de la tension de sortie et l'organe S2 c'est-à-dire l'organe élévateur en fonction de la tension d'entrée.

Cependant et comme cela est illustré sur la figure 25, l'inverse peut également être envisagé, c'est-à-dire que l'organe S1, l'organe abaisseur, peut également être piloté par des moyens de commande en fonction de la tension d'entrée du système désigné par la référence générale 12 sur cette figure et l'organe S2, c'est-à-dire l'organe élévateur, peut être piloté par des moyens d'asservissement sur la tension de sortie, telles que désignées par la référence générale 13 sur cette figure 25.

On appellera par la suite $\alpha_{S1} = \alpha_{buck}$, le rapport cyclique de commande de l'organe S1 et $\alpha_{S2} = \alpha_{boost}$, le rapport cyclique de commande de l'organe S2.

La fonction G ($V_{out}$) permettant de réguler la tension de sortie peut être un correcteur d'erreurs vis-à-vis d'une consigne de tension de sortie constituée par exemple par un correcteur analogique de type P, PI, PID ou encore un correcteur numérique ou autre.

Le choix de la fonction F ($V_{in}$) permettant de commander l'autre organe conditionne directement les points de fonctionnement du montage. En effet, en conduction continue, la relation liant les tensions d'entrée et de sortie du montage, avec les rapports cycliques de commande des organes, est :

$$V_{out} \times (1 - \alpha_{boost}) = V_{in} \times \alpha_{buck}.$$

La fonction de commande en MLI, c'est-à-dire en modulation de largeur d'impulsion, réalisant la commande des organes commutateurs à semi-conducteurs, à partir des résultats des fonctions précédentes, peut être réalisée par exemple avec :

- soit un contrôle en mode tension, le rapport cyclique résultant étant alors directement proportionnel à la consigne,
- soit un contrôle en mode courant (crête, moyen ou vallée), le courant dans l'interrupteur étant alors proportionnel à la consigne.

Les deux blocs de commande en modulation de largeur d'impulsion peuvent alors utiliser des fréquences de découpage identiques ou différentes (sous-multiples entiers ou non), et être synchronisés ou non.

Pour adapter le rendement de la structure aux faibles charges, des techniques de saut ou de salve d'impulsion peuvent également être appliquées à la commande des organes S1 ou S2 ou des autres redresseurs si ceux-ci sont pilotables.

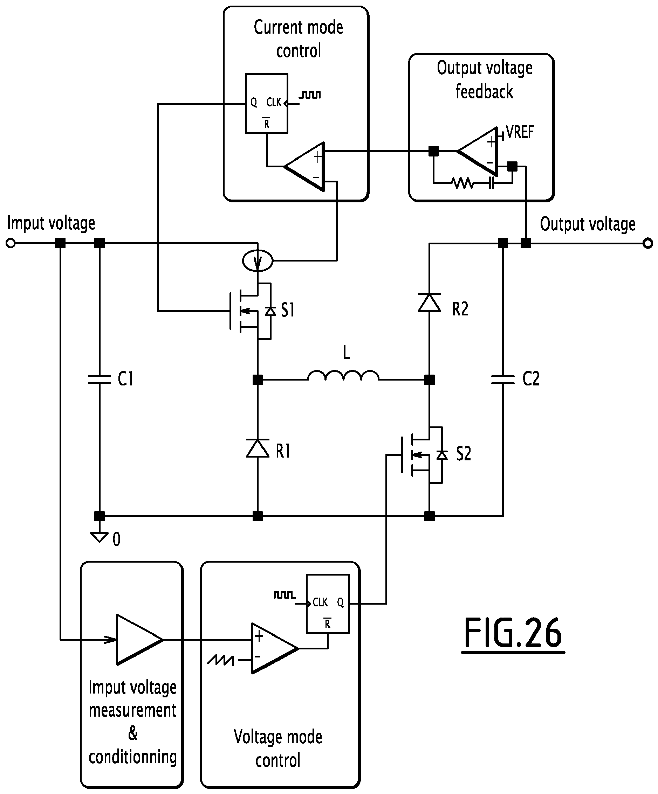

La figure 26 donne un exemple de réalisation implémenté sur un module d'alimentation avionique.

Dans ce cas l'organe S1 est commandé avec un asservissement en courant crête sur la tension de sortie du convertisseur tandis que l'organe S2 est commandé par loi affine en fonction de la tension d'entrée.

Dans cet exemple de réalisation, les deux organes S1 e S2 découpent à la même fréquence, et ils sont synchronisés et en phase.

Le réglage de la commande $\alpha_{boost}$ en boucle ouverte de l'organe S2 conditionne la commande $\alpha_{buck}$ résultant de la boucle fermée de régulation de la tension de sortie du convertisseur selon la relation :

$$V\,out\,.\,(1 - \alpha\,boost) = V_{in}\,.\,\alpha_{buck}.$$

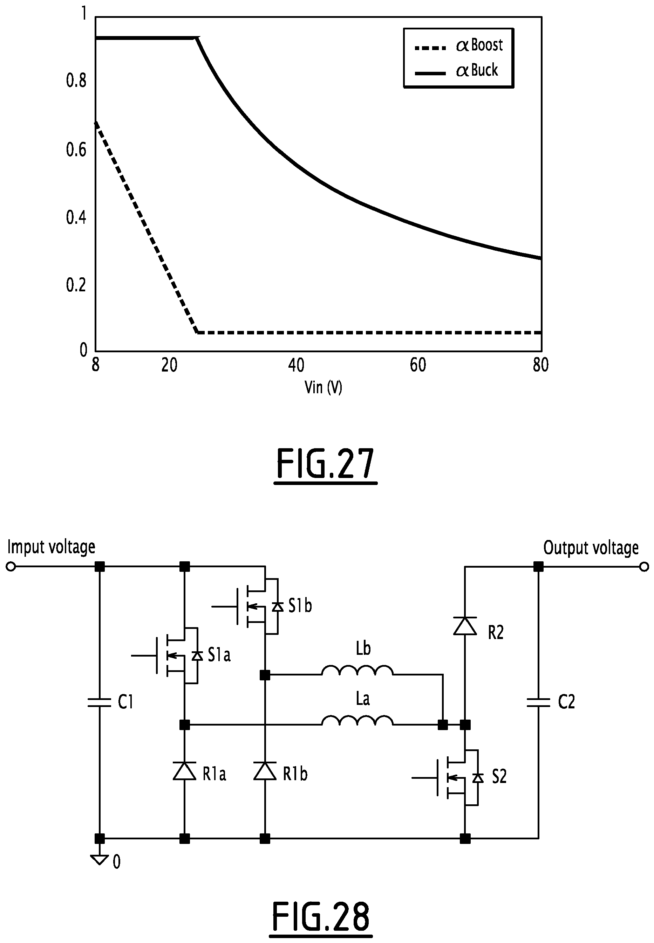

Le graphique donné à la figure 27 illustre cette relation pour un convertisseur à grande dynamique d'entrée de tension par exemple de 8 à 80 volts continus vers 24 volts continus.

On conçoit alors qu'une telle structure présente un certain nombre d'avantages. En effet il n'y a pas de discontinuité de mode de fonctionnement et ce système est beaucoup plus simple à implémenter que les solutions de l'état de la technique. En effet il n'y a qu'une seule logique de commande et pas de transition à gérer.

Un tel système peut également fonctionner avec un redressement synchrone c'est-à-dire dans lequel les redresseurs R1 et/ou R2 sont des organes commutateurs à semi-conducteurs commandables.

Par ailleurs dans un tel système, tous les éléments de puissance et de contrôle étant actifs dans tous les modes de fonctionnement, il n'y a pas non plus de panne latente possible.

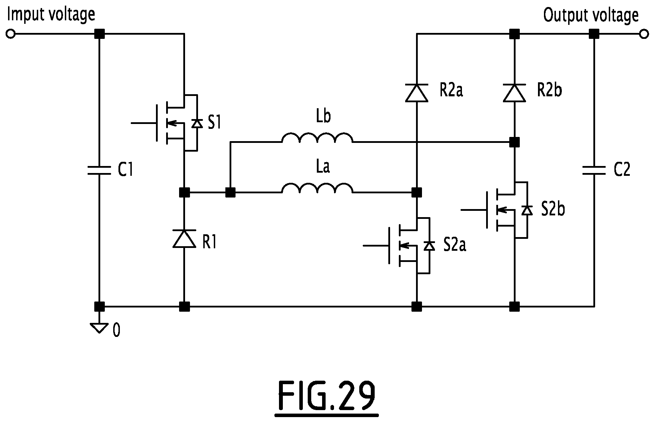

Enfin une telle architecture de système peut également être généralisée à des structures multiphasées utilisant plusieurs inductances couplées ou non et plusieurs blocs abaisseurs/élévateurs comme cela est illustré sur les figures 28 et 29, sur lesquelles des structures multiphasées respectivement en entrée et en sortie, sont illustrées.

## Revendications

1. Système d'alimentation régulée à grande dynamique d'entrée de tension, du type comportant un convertisseur abaisseur/élévateur de tension (2) à inductance commune (3) et comportant au moins deux organes commutateurs à semi-conducteurs commandables (S1, S2) associés l'un (S1) à la fonction d'abaisseur du convertisseur et l'autre (S2) à la fonction d'élévateur du convertisseur, **caractérisé en ce que** l'un des organes commutateurs à semi-conducteurs commandables est piloté de façon continue par des moyens de commande (10 ; 12) en fonction de la tension d'entrée du système, et l'autre est piloté de façon continue par des moyens d'asservissement (11 ; 13) sur la tension de sortie, les moyens de commande (10, 12) et les moyens d'asservissement (11 ; 13) des organes commutateurs à semi-conducteurs commandables (S1, S2) étant actifs dans tous les modes de fonctionnement du système d'alimentation régulée, des rapports cycliques respectifs de commande des organes commutateurs à semi-conducteurs étant différents de 0 et de 1 dans tous les modes de fonctionnement du système d'alimentation.

2. Système d'alimentation régulée à grande dynamique d'entrée de tension selon la revendication 1, **caractérisé en ce que** l'organe commutateur à semi-conducteurs commandable piloté par les moyens de commande (12) en fonction de la tension d'entrée du système est l'organe commutateur (S1) associé à la fonction d'abaisseur du convertisseur.

3. Système d'alimentation régulée à grande dynamique d'entrée de tension selon la revendication 1, **caractérisé en ce que** l'organe commutateur à semi-conducteurs commandable piloté par les moyens de commande (10) en fonction de la tension d'entrée du système est l'organe commutateur (S2) associé à la fonction d'élévateur du système.

4. Système d'alimentation régulée à grande dynamique d'entrée de tension selon l'une quelconque des revendications précédentes, **caractérisé en ce que** les moyens de commande (10, 12) en fonction de la tension d'entrée du système mettent en oeuvre une fonction affine de commande de l'organe correspondant.

5. Système d'alimentation régulée à grande dynamique d'entrée de tension selon l'une quelconque des revendications précédentes, **caractérisé en ce que** les moyens d'asservissement (11, 13) sur la tension d'entrée de l'autre organe mettent en oeuvre une fonction d'asservissement à une consigne.

6. Système d'alimentation régulée à grande dynamique d'entrée de tension selon la revendication 5, **caractérisé en ce que** les moyens d'asservissement comprennent un correcteur analogique choisi dans le groupe comprenant un correcteur de type P, PI ou PID ou un correcteur numérique.

7. Système d'alimentation régulée à grande dynamique d'entrée de tension selon l'une quelconque des revendications précédentes, **caractérisé en ce que** les moyens de commande des organes commutateurs à semi-conducteurs mettent en oeuvre des moyens de commande en mode tension ou en mode courant.

**8.** Système d'alimentation régulée à grande dynamique d'entrée de tension selon l'une quelconque des revendications précédentes, **caractérisé en ce que** les moyens de commande des organes commutateurs à semi-conducteurs mettent en oeuvre des moyens de limitation de courant positif et/ou négatif.

**9.** Système d'alimentation régulée à grande dynamique d'entrée de tension selon l'une quelconque des revendications précédentes, **caractérisé en ce que** les moyens de commande des organes commutateurs à semi-conducteurs mettent en oeuvre des moyens indépendants ou non, à des fréquences différentes ou identiques, en phase ou déphasés.

**10.** Système d'alimentation régulée à grande dynamique d'entrée de tension selon la revendication 9, **caractérisé en ce que** les moyens de commande mettent en oeuvre des moyens de commande par saut ou par salve d'impulsion.

**Patentansprüche**

**1.** Geregeltes Energieversorgungssystem mit hoher Eingangsspannungsdynamik, von der Art, die einen Spannungsabsenker/erhöher (2) mit gemeinsamer Induktivität (3) aufweist, und aufweisend mindestens zwei steuerbare Halbleiter-Schalteinheiten (S1, S2), wobei eine (S1) mit der Absenkfunktion des Wandlers und die andere (S2) mit der Erhöhungsfunktionalität des Wandlers assoziiert ist, dadurch charakterisiert, dass eine der steuerbaren Halbleiter-Schalteinheiten von Steuermitteln (10; 12) auf stetige Weise in Abhängigkeit der Eingangsspannung des Systems gesteuert wird und die andere auf stetige Weise durch Mittel zur Regelung (11; 13) der Ausgangsspannung gesteuert wird, wobei die Steuermittel (10, 12) und die Mittel zur Regelung (11; 13) der steuerbaren Halbleiter-Schalteinheiten (S1, S2) in allen Betriebsmodi des geregelten Energieversorgungssystems aktiv sind, wobei die jeweiligen zyklischen Steuerverhältnisse der Halbleiter-Schalteinheiten in allen Betriebsmodi des Energieversorgungssystems von 0 und 1 verschieden sind.

**2.** Geregeltes Energieversorgungssystem mit hoher Eingangsspannungsdynamik gemäß Anspruch 1, dadurch charakterisiert, dass die von den Steuermitteln (12) in Abhängigkeit der Eingangsspannung des Systems gesteuerte steuerbare Halbleiter-Schalteinheit die Schalteinheit (S1) ist, die mit der Absenkfunktion des Wandlers assoziiert ist.

**3.** Geregeltes Energieversorgungssystem mit hoher Eingangsspannungsdynamik gemäß Anspruch 1, dadurch charakterisiert, dass die von den Steuermitteln (10) in Abhängigkeit der Eingangsspannung des Systems gesteuerte steuerbare Halbleiter-Schalteinheit die Schalteinheit (S2) ist, die mit der Erhöhungsfunktion des Wandlers assoziiert ist.

**4.** Geregeltes Energieversorgungssystem mit hoher Eingangsspannungsdynamik gemäß einem der vorhergehenden Ansprüche, dadurch charakterisiert, dass die Mittel zum Steuern (10, 12) in Abhängigkeit der Eingangsspannung des Systems eine affine Steuerfunktion der zugehörigen Einheit implementieren.

**5.** Geregeltes Energieversorgungssystem mit hoher Eingangsspannungsdynamik gemäß einem der vorhergehenden Ansprüche, dadurch charakterisiert, dass die Mittel zur Regelung (11, 13) der Eingangsspannung der anderen Einheit eine Regelungsfunktion mit einem Sollwert ausführen.

**6.** Geregeltes Energieversorgungssystem mit hoher Eingangsspannungsdynamik gemäß Anspruch 5, dadurch charakterisiert, dass die Regelungsmittel einen analogen Regler, ausgewählt aus der Gruppe aufweisend einen Regler vom Typ P, PI oder PID, oder einen digitalen Regler aufweisen.

**7.** Geregeltes Energieversorgungssystem mit hoher Eingangsspannungsdynamik gemäß einem der vorhergehenden Ansprüche, dadurch charakterisiert, dass die Mittel zum Steuern der steuerbaren Halbleiter-Schalteinheiten Mittel zum Steuern im Spannungsmodus oder im Strommodus implementieren.

**8.** Geregeltes Energieversorgungssystem mit hoher Eingangsspannungsdynamik gemäß einem der vorhergehenden Ansprüche, dadurch charakterisiert, dass die Mittel zum Steuern der steuerbaren Halbleiter-Schalteinheiten Mittel zur Begrenzung des positiven und/oder negativen Stroms implementieren.

**9.** Geregeltes Energieversorgungssystem mit hoher Eingangsspannungsdynamik gemäß einem der vorhergehenden Ansprüche, dadurch charakterisiert, dass die Mittel zum Steuern der steuerbaren Halbleiter-Schalteinheiten Mittel unabhängige Mittel oder nicht, mit unterschiedlichen oder identischen Frequenzen, in Phase oder phasenverschoben, implementieren.

**10.** Geregeltes Energieversorgungssystem mit hoher Eingangsspannungsdynamik gemäß Anspruch 9, dadurch charakterisiert, dass die Steuermittel Mittel zum Steuern mittels Sprung oder Puls implementieren.

**Claims**

1. A regulated power supply system with high input voltage dynamics, of the type having a shared inductance (3) buck/boost transformer (2) and having at least two controllable semiconductor switching members (S1, S2), one (S1) associated with the buck function of the transformer and the other (S2) with the boost function of the transformer, **characterized in that** one of the controllable semiconductor switching members is driven continuously using control means (10; 12) as a function of the system's input voltage, and the other is driven continuously by enslavement means (11; 13) on the output voltage, the control means (10, 12) and the enslavement means (11; 13) of the controllable semiconductor switching members (S1, S2) being active in all operating modes of the regulated power supply system, respective cyclic control ratios of the controllable semiconductor switching members being different of 0 and of 1 in all operating modes of the power supply system.

2. Regulated power supply system with high input voltage dynamics according to claim 1, **characterized in that** the controllable semiconductor switching member driven by the control means (12) as a function of the system's input voltage is the switching member (S1) associated with the buck function of the transformer.

3. Regulated power supply system with high input voltage dynamics according to claim 1, **characterized in that** the controllable semiconductor switching member driven by the control means (10) as a function of the system's input voltage is the switching member (S2) associated with the system's boost function.

4. Regulated power supply system with high input voltage dynamics according to any one of the preceding claims, **characterized in that** the control means (10, 12) as a function of the system's input voltage use an affine function for controlling the corresponding member.

5. Regulated power supply system with high input voltage dynamics according to any one of the preceding claims, **characterized in that** the enslavement means (11, 13) on the input voltage of the other member use an enslavement function on a set point.

6. Regulated power supply system with high input voltage dynamics according to claim 5, **characterized in that** the enslavement means comprise an analog corrector chosen from the group comprising a P, PI or PID type corrector or a digital corrector.

7. Regulated power supply system with high input voltage dynamics according to any one of the preceding claims, **characterized in that** the control means of the semiconductor switching members use control means in voltage mode or in current mode.

8. Regulated power supply system with high input voltage dynamics according to any one of the preceding claims, **characterized in that** the control means of the semiconductor switching members use positive and/or negative current limiting means.

9. Regulated power supply system with high input voltage dynamics according to any one of the preceding claims, **characterized in that** the control means of the semiconductor switching members use means that may or may not be independent, at different or identical frequencies, in phase or out of phase.

10. Regulated power supply system with high input voltage dynamics according to claim 9, **characterized in that** the control means use control means by pulse burst or skipping burst.

**FIG.1**

**FIG.2**

FIG.3

FIG.4

FIG.5

Imput voltage

Output voltage

4

5

3

C1

$V_{in}$

S1

$I_L$

L

R2

C2

$V_{out}$

$V_L$

R1

S2

0

1

2

<u>FIG.6</u>

$V_L$

Vin−Vout

T

t

−Vout

<u>FIG.7</u>

$I_L$

$\alpha \times T$

T

t

<u>FIG.8</u>

Imput voltage  Output voltage

C1  Vin  S1  L  R2  C2  Vout

R1  V_L  S2

0  1  2  3  4  5

## FIG.9

Imput voltage

Output voltage

4

5

3

S1

R2

C1

Vin

$I_L$

L

C2

Vout

$V_L$

R1

S2

0

1

2

## FIG.10

$V_L$

Vin

$\alpha \times T$

t

## FIG.11

$I_L$

$\alpha \times T$

t

## FIG.12

## FIG.13

## FIG.14

## FIG.15

Imput voltage

Output voltage

C1 — $V_{in}$

$I_L$  L

$V_L$

C2 — $V_{out}$

S1

R2

R1

S2

4

5

3

1

2

## FIG.16

$V_L$

$V_{in}$

$\alpha$ x T

t

## FIG.17

$I_L$

$\alpha$ x T

t

## FIG.18

## FIG.19

## FIG.20

## FIG.21

FIG.22

FIG.23

FIG.24

FIG.25

Current mode
control

Output voltage
feedback

Q CLK

R̄

VREF

Imput voltage

Output voltage

S1

R2

L

C1

C2

R1

S2

0

Imput voltage
measurement
&
conditionning

CLK Q

R̄

Voltage mode
control

# FIG.26

## FIG.27

## FIG.28

Imput voltage

Output voltage

# FIG.29

## RÉFÉRENCES CITÉES DANS LA DESCRIPTION

**Documents brevets cités dans la description**

- US 6977488 B1